(19) Europäisches Patentamt
European Patent Office
Office européen des brevets

(11) **EP 4 364 824 A1**

(12) **EUROPEAN PATENT APPLICATION**

(43) Date of publication:
08.05.2024 Bulletin 2024/19

(21) Application number: 23203535.2

(22) Date of filing: 13.10.2023

(51) International Patent Classification (IPC):
**B01D 53/94** (2006.01)    **B01J 23/63** (2006.01)
**B01J 35/00** (2024.01)    **B01J 35/57** (2024.01)
**B01J 35/60** (2024.01)    **F01N 3/10** (2006.01)

(52) Cooperative Patent Classification (CPC):
**B01D 53/9454; F01N 3/101;** B01D 2255/1023;
B01D 2255/1025; B01D 2255/2042;
B01D 2255/2065; B01D 2255/20715;
B01D 2255/407; B01D 2255/9022;
B01D 2255/9202; B01D 2255/9205;
B01D 2258/014; B01J 23/63; B01J 35/19;
B01J 35/57;                              (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   07.11.2022   JP 2022178392

(71) Applicants:
• **TOYOTA JIDOSHA KABUSHIKI KAISHA
Toyota-shi
Aichi 471-8571 (JP)**
• **Kabushiki Kaisha Toyota Chuo Kenkyusho
Nagakute-shi, Aichi 480-1192 (JP)**

• **CATALER CORPORATION
Kakegawa-shi, Shizuoka 437-1492 (JP)**

(72) Inventors:
• **KABASHIMA, Nobusuke
Toyota-shi, 471-8571 (JP)**
• **YAMAMOTO, Toshio
Nagakute-shi, 480-1192 (JP)**
• **HATANAKA, Miho
Nagakute-shi, 480-1192 (JP)**
• **SHINOZAKI, Tetsuya
Kakegawa-shi, 437-1492 (JP)**

(74) Representative: **J A Kemp LLP
80 Turnmill Street
London EC1M 5QU (GB)**

(54) **EXHAUST GAS PURIFICATION DEVICE**

(57)     The exhaust gas purification device includes a substrate, a first catalyst layer, and a second catalyst layer. The substrate includes an upstream end and a downstream end. The first catalyst layer contains first catalyst particles and lies on the substrate across a first region extending between the upstream end and a first position. The first position is at a first distance from the upstream end toward the downstream end. The second catalyst layer contains second catalyst particles and lies on the first catalyst layer across the first region. The second catalyst layer is provided with pores. Pore connectivity of the second catalyst layer is 5% to 35%. A mean value of areas of the pores of the second catalyst layer in a cross-sectional backscattered electron image of the second catalyst layer may be 0.7 $\mu m^2$ to 9.0 $\mu m^2$.

Fig. 1

**EP 4 364 824 A1**

(52) Cooperative Patent Classification (CPC): (Cont.)
B01J 35/60; B01J 37/0244; B01J 37/0248;
B01J 37/038

**Description**

BACKGROUND

Technical Field

The present disclosure relates to an exhaust gas purification device.

Background Art

An exhaust gas emitted from an internal combustion engine used in a vehicle, such as an automobile, contains a harmful substance, such as carbon monoxide (CO), hydrocarbon (HC), and nitrogen oxide (NOx). Regulations on emission amounts of these harmful substances have been tightened year by year. To remove these harmful substances, a noble metal, such as platinum (Pt), palladium (Pd), and rhodium (Rh), has been used as a catalyst.

JP 2008-279428 A discloses an exhaust gas purification catalyst that includes a catalyst layer provided with pores. JP 2008-279428 A discloses that the catalyst layer contains a catalyst powder containing a noble metal, and Pd and Rh are exemplified as the noble metal.

JP 2022-061298 A discloses an exhaust gas purification device that includes a substrate and a catalyst layer formed on the substrate. The exhaust gas purification device of JP 2022-061298 A includes a first catalyst layer formed in contact with the substrate over an upstream region in a flow direction of an exhaust gas. The first catalyst layer has an inner surface defining macropores.

SUMMARY

Further reduction in NOx emission amount and total hydrocarbon (THC) emission amount is desired. Therefore, the present disclosure provides an exhaust gas purification device that allows reducing a NOx emission amount and a THC emission amount.

The present disclosure includes the following aspects.

1. An exhaust gas purification device comprises:

a substrate including an upstream end through which an exhaust gas is introduced into the device and a downstream end through which the exhaust gas is discharged from the device;
a first catalyst layer containing first catalyst particles, the first catalyst layer lying on the substrate across a first region, the first region extending between the upstream end and a first position, the first position being at a first distance from the upstream end toward the downstream end; and
a second catalyst layer containing second catalyst particles, the second catalyst layer lying on the first catalyst layer across the first region,
wherein the second catalyst layer is provided with pores, and
wherein a pore connectivity of the second catalyst layer expressed by formula (1) below is 5% to 35%,

$$\text{the pore connectivity of the second catalyst layer (\%)} = (S2/900) \times 100 \quad (1),$$

wherein S2 represents a mean value of a sum of areas ($\mu m^2$) of the pores that intersect or are in contact with an outer edge of a 30 $\mu m$ square region and fall within the 30 $\mu m$ square region in a cross-sectional backscattered electron image of the second catalyst layer.

2. The exhaust gas purification device according to Aspect 1,
wherein the pore connectivity of the second catalyst layer is 10% to 35%.
3. The exhaust gas purification device according to Aspect 1 or 2,
wherein in the cross-sectional backscattered electron image of the second catalyst layer, a mean value of areas of the pores not in contact with an outer edge of the cross-sectional backscattered electron image is 0.7 $\mu m^2$ to 9.0 $\mu m^2$.
4. The exhaust gas purification device according to any one of Aspects 1 to 3,
wherein in the cross-sectional backscattered electron image of the second catalyst layer, a mean value of areas of the pores not in contact with an outer edge of the cross-sectional backscattered electron image is 2.0 $\mu m^2$ to 9.0 $\mu m^2$.
5. The exhaust gas purification device according to any one of Aspects 1 to 4,
wherein the second catalyst layer has a thickness within a range of 15 $\mu m$ to 65 $\mu m$.

6. The exhaust gas purification device according to any one of Aspects 1 to 5,
wherein the second catalyst layer has a thickness within a range of 35 μm to 65 μm.
7. The exhaust gas purification device according to any one of Aspects 1 to 6,

wherein the first catalyst layer is provided with pores, and
wherein a pore connectivity of the first catalyst layer expressed by formula (2) below is 5% to 35%,

$$\text{the pore connectivity of the first catalyst layer (\%)} = (S1/900) \times 100 \quad (2),$$

wherein S 1 represents a mean value of a sum of areas ($\mu$m$^2$) of the pores that intersect or are in contact with an outer edge of a 30 μm square region and fall within the 30 μm square region in a cross-sectional backscattered electron image of the first catalyst layer.

8. The exhaust gas purification device according to Aspect 7,
wherein the pore connectivity of the first catalyst layer is 5% or more and less than 10%.
9. The exhaust gas purification device according to any one of Aspects 1 to 8, further comprises
a third catalyst layer containing third catalyst particles, the third catalyst layer lying on the substrate across a second region, the second region extending between the downstream end and a second position, the second position being at a second distance from the downstream end toward the upstream end.
10. The exhaust gas purification device according to Aspect 9,

wherein the third catalyst layer is provided with pores, and
wherein a pore connectivity of the third catalyst layer expressed by formula (3) below is 5% to 35%,

$$\text{the pore connectivity of the third catalyst layer (\%)} = (S3/900) \times 100 \quad (3),$$

wherein S3 represents a mean value of a sum of areas ($\mu$m$^2$) of the pores that intersect or are in contact with an outer edge of a 30 μm square region and fall within the 30 μm square region in a cross-sectional backscattered electron image of the third catalyst layer.

11. The exhaust gas purification device according to Aspect 10,
wherein the pore connectivity of the third catalyst layer is 10% to 35%.
12. The exhaust gas purification device according to any one of Aspects 1 to 11,

wherein in the cross-sectional backscattered electron image of the second catalyst layer, a complexity of the pores expressed by formula (4) below is 12.6 to 19.0,

$$\text{the complexity of pores} = L^2/S \quad (4),$$

wherein S represents a mean value of areas of the pores not in contact with an outer edge of the cross-sectional backscattered electron image, and L represents a mean value of perimeters of the pores not in contact with the outer edge of the cross-sectional backscattered electron image.

The exhaust gas purification device of the present disclosure can reduce a NOx emission amount and a THC emission amount.

BRIEF DESCRIPTION OF THE DRAWINGS

FIG 1 is an enlarged end view of a main part of an exhaust gas purification device according to one embodiment taken along a surface parallel to a flow direction of an exhaust gas and schematically illustrating a configuration of a partition wall of a substrate and a proximity thereof;

FIG 2 is a perspective view schematically illustrating an example of the substrate;
FIG 3 is an enlarged end view of a main part of an exhaust gas purification device according to one embodiment taken along a surface parallel to a flow direction of an exhaust gas and schematically illustrating a configuration of a partition wall of a substrate and a proximity thereof;

FIG 4 is an image of pores extracted from a cross-sectional backscattered electron image of a second catalyst layer of an exhaust gas purification device of Comparative Example 1 by image analysis software processing, the cross-sectional backscattered electron image being perpendicular to a flow direction of an exhaust gas;

FIG 5 is an image of pores extracted from a cross-sectional backscattered electron image of the second catalyst layer of the exhaust gas purification device of Comparative Example 1 by image analysis software processing, the cross-sectional backscattered electron image being parallel to the flow direction of an exhaust gas;

FIG 6 is an image of pores extracted from a cross-sectional backscattered electron image of a second catalyst layer of an exhaust gas purification device of Example 1 by image analysis software processing, the cross-sectional backscattered electron image being perpendicular to a flow direction of an exhaust gas;

FIG 7 is an image of pores extracted from a cross-sectional backscattered electron image of the second catalyst layer of the exhaust gas purification device of Example 1 by image analysis software processing, the cross-sectional backscattered electron image being parallel to the flow direction of an exhaust gas;

FIG 8 is an image of pores extracted from a cross-sectional backscattered electron image of a second catalyst layer of an exhaust gas purification device of Example 5 by image analysis software processing, the cross-sectional backscattered electron image being perpendicular to a flow direction of an exhaust gas;

FIG 9 is an image of pores extracted from a cross-sectional backscattered electron image of the second catalyst layer of the exhaust gas purification device of Example 5 by image analysis software processing, the cross-sectional backscattered electron image being parallel to the flow direction of an exhaust gas;

FIG 10 is a graph illustrating THC conversion amounts of exhaust gas purification devices of Examples 1 to 5 and Comparative Examples 1 to 3;

FIG 11 is a graph illustrating NOx conversion amounts of the exhaust gas purification devices of Examples 1 to 5 and Comparative Examples 1 to 3;

FIG 12 is a graph illustrating THC conversion amounts of exhaust gas purification devices of Examples 1 to 4 and 6 to 9; and

FIG 13 is a graph illustrating NOx conversion amounts of the exhaust gas purification devices of Examples 1 to 4 and 6 to 9.

DETAILED DESCRIPTION

The following will describe embodiments of the present disclosure with reference to the drawings. In the drawings referred in the following description, same reference numerals may be used for the same members or members having similar functions, and their repeated descriptions may be omitted in some cases. For convenience of explanation, a dimensional ratio in the drawings may differ from the actual ratio, and a part of a member may be omitted from the drawing in some cases. A numerical range expressed herein using the term "to" includes values described before and after the term "to" as the lower limit value and the upper limit value, respectively. Upper limit values and lower limit values of numerical ranges described herein can be appropriately combined. The term "on" herein includes both of "directly on" and "indirectly on" insofar as it is not especially specified in the context. The terms "comprise", "include", and "contain" herein mean that an additional component may be contained, and encompass the term "consisting essentially of" and the term "consisting of." The term "consisting essentially of" means that an additional component having substantially no adverse effect may be contained. The term "consisting of" means including only described materials, it does not exclude inclusion of inevitable impurities.

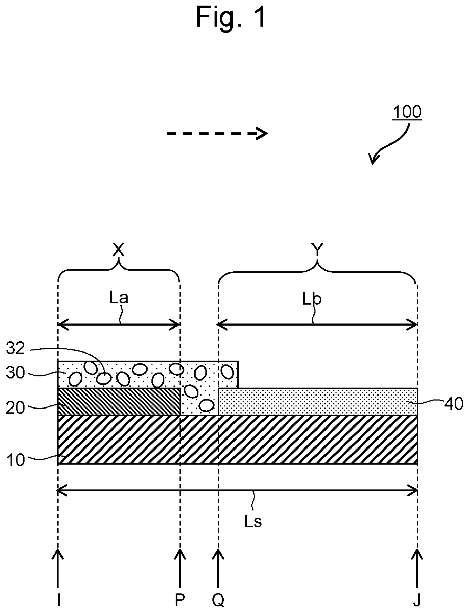

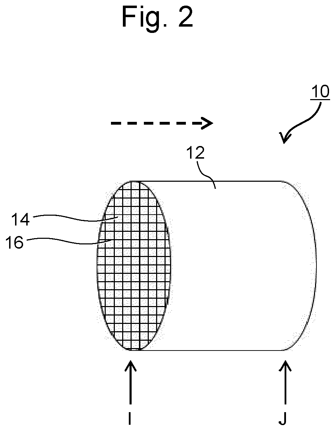

An exhaust gas purification device 100 according to the embodiment will be described with reference to FIGS. 1 and 2. The exhaust gas purification device 100 according to the embodiment includes a substrate 10, a first catalyst layer 20, a second catalyst layer 30, and a third catalyst layer 40. The third catalyst layer 40 is not essential.

(1) Substrate 10

The shape of the substrate 10 is not specifically limited. However, for example, as illustrated in FIG 2, the substrate 10 may include a frame portion 12 and partition walls 16 that partition a space inside the frame portion 12 to define a plurality of cells 14. The frame portion 12 and the partition walls 16 may be integrally formed. The frame portion 12 may have any shape, such as a cylindrical shape, an elliptical cylindrical shape, or a polygonal cylindrical shape. The partition walls 16 extend between a first end (a first end surface) I and a second end (a second end surface) J of the substrate 10 to define the plurality of cells 14 extending between the first end I and the second end J. Each cell 14 may have any cross-sectional shape including: a quadrilateral shape, such as a square shape, a parallelogram, a rectangular shape, and a trapezoidal shape; a triangular shape; any polygonal shape (for example, a hexagonal shape and an octagonal shape); and a circular shape.

For example, the substrate 10 may be formed of a ceramic material having a high heat resistance, such as

cordierite ($2MgO \cdot 2Al_2O_3 \cdot 5SiO_2$), alumina, zirconia, and silicon carbide, or a metal foil, such as a stainless-steel foil. From an aspect of cost, the substrate 10 may be made of cordierite.

In FIGS. 1 and 2, the dashed arrows indicate a flow direction of an exhaust gas in the exhaust gas purification device 100 and the substrate 10. The exhaust gas is introduced into the exhaust gas purification device 100 through the first end I, and discharged from the exhaust gas purification device 100 through the second end J. Therefore, hereinafter, the first end I will also be referred to as an upstream end I, and the second end J will also be referred to as a downstream end J as appropriate. A length between the upstream end I and the downstream end J, that is, the total length of the substrate 10, is herein denoted as Ls.

(2) First Catalyst Layer 20

The first catalyst layer 20 lies on the substrate 10 across a first region X extending between the upstream end I and a first position P, which is at a first distance La from the upstream end I toward the downstream end J (that is, in the flow direction of the exhaust gas). The first catalyst layer 20 need only extend across at least the first region X and may extend beyond the first position P.

The first catalyst layer 20 contains first catalyst particles. The first catalyst particles mainly function as a catalyst for oxidizing HC. The first catalyst particles may be, for example, particles of at least one metal selected from the group consisting of platinum (Pt), palladium (Pd), rhodium (Rh), ruthenium (Ru), osmium (Os), iridium (Ir), silver (Ag), and gold (Au), and may be particles of at least one metal selected from Pt or Pd in some embodiments. The amount of the first catalyst particles contained in the first catalyst layer 20 may be, for example, 0.1 g/L to 10 g/L based on a substrate capacity in the first region X, may be 1 g/L to 9 g/L based on the substrate capacity in the first region X in some embodiments, and may be 3 g/L to 7 g/L based on the substrate capacity in the first region X in some embodiments. This allows the exhaust gas purification device 100 to have a sufficiently high exhaust gas purification performance.

The first catalyst particles may be loaded on catalytic support particles. The first catalyst particles can be loaded by any loading method such as an impregnation loading method, an adsorption loading method, and a water-absorption loading method.

The catalytic support particles may contain a metal oxide. Examples of the metal oxide include oxide of at least one metal selected from the group consisting of metals of the group 3, the group 4, and the group 13 in the periodic table of elements, and lanthanoid-based metals. More specifically, examples include oxide of at least one metal selected from the group consisting of scandium (Sc), yttrium (Y), lanthanum (La), cerium (Ce), neodymium (Nd), samarium (Sm), europium (Eu), lutetium (Lu), titanium (Ti), zirconium (Zr), and aluminum (Al). The metal oxide may be oxide of at least one metal selected from the group consisting of Y, La, Ce, Nd, Ti, Zr, and Al in some embodiments. When the metal oxide is an oxide of two or more metals, the catalytic support particles may be particles containing a mixture of two or more metal oxides, may be particles containing a composite oxide containing two or more metals, or may be particles containing a mixture of at least one metal oxide and at least one composite oxide.

The catalytic support particles may contain particles that function as an Oxygen Storage Capacity (OSC) material that stores oxygen in the atmosphere under oxygen excess atmosphere and releases oxygen under oxygen deficient atmosphere. Examples of the OSC material include ceria ($CeO_2$), composite oxides of ceria and another oxide (for example, a Ce-Zr-based composite oxide, which is a composite oxide of ceria and zirconia ($ZrO_2$), and an Al-Ce-Zr-based composite oxide, which is a composite oxide of alumina ($Al_2O_3$), ceria, and zirconia) and materials obtained by adding an additive to them. In particular, a Ce-Zr-based composite oxide may be used as an OSC material because the Ce-Zr-based composite oxide has high oxygen storage capacity and is relatively inexpensive. The additive may be, for example, at least one of lanthana ($La_2O_3$), yttria ($Y_2O_3$), neodymia ($Nd_2O_3$), or praseodymia ($Pr_6O_{11}$), and these materials allow the heat resistance of an OSC material to improve. The additive may form a composite oxide together with a main component of an OSC material.

The first catalyst layer 20 may further contain another optional ingredient. Examples of another optional ingredient include, for example, a binder and an additive.

The first catalyst layer 20 may be provided with pores (not illustrated). This improves the diffusibility of the exhaust gas in the first catalyst layer 20, thus allowing efficient purification of the exhaust gas.

Pore connectivity of the first catalyst layer 20 expressed by formula (2) below may be 5% to 35%,

$$\text{Pore connectivity of first catalyst layer (\%)} = (S1/900) \times 100 \quad (2),$$

wherein S 1 represents the mean value of the sum of the areas ($\mu m^2$) of the pores that intersect or are in contact with an outer edge of a 30 $\mu m$ square region and fall within the 30 $\mu m$ square region (hereinafter, the sum of the areas of such pores is referred to as a "connected pore area") in a cross-sectional backscattered electron image of the first catalyst layer 20. This can improve the exhaust gas purification performance of the exhaust gas purification device 100.

The connected pore area can be measured using image analysis software, such as ImageJ. The mean value S 1 of the connected pore area can be determined by measuring the connected pore areas at 10 or more randomly selected points and calculating the arithmetic mean of the measured connected pore areas.

In addition, the ratio (S1/Sa1) of the mean value S1 of the connected pore area to a mean value Sa1 of the sum of the areas ($\mu$m$^2$) of all pores included in the above-described 30 $\mu$m square region (hereinafter, the sum of the areas of all the pores is referred to as a "total pore area") may be 35% to 85%. The total pore area can be measured using image analysis software, such as ImageJ. The mean value Sa1 of the total pore area can be determined by measuring the total pore areas at 10 or more randomly selected points and calculating the arithmetic mean of the measured total pore areas.

In the cross-sectional backscattered electron image of the first catalyst layer 20, the mean value of pore areas may be 0.7 $\mu$m$^2$ to 9.0 $\mu$m$^2$. The mean value of area-equivalent circle diameters of the pores may be 0.7 $\mu$m to 2 $\mu$m. The mean value of pore perimeters may be 4.0 $\mu$m to 12 $\mu$m. The mean value of the pore areas, the mean value of the area-equivalent circle diameters of the pores, and the mean value of the pore perimeters herein can be determined as follows. Image analysis software, such as ImageJ, is used to select 10 or more pores that have a size greater than the resolutions of the backscattered electron image and the image analysis software and are not in contact with the outer edge of the image. The area, area-equivalent circle diameter, and perimeter of each of these pores are measured. Then, the arithmetic means of the measured values are calculated.

Further, in the cross-sectional backscattered electron image of the first catalyst layer 20, the complexity of the pores expressed by formula (4) below may be 12.6 to 19.0,

$$\text{Complexity of pores} = L^2/S \quad (4),$$

wherein S represents the mean value of the areas of the pores not in contact with the outer edge of the cross-sectional backscattered electron image, and L represents the mean value of the perimeters of the pores not in contact with the outer edge of the cross-sectional backscattered electron image.

In some embodiments, the pore connectivity of the first catalyst layer 20 may be 5% or more and less than 10%. In addition, the ratio (S1/Sa1) of the mean value S1 of the connected pore area to the mean value Sa1 of the total pore area may be 35% or more and less than 50%. In the cross-sectional backscattered electron image of the first catalyst layer 20, the mean value of the pore areas may be 0.7 $\mu$m$^2$ or more and less than 2.0 $\mu$m$^2$. The mean value of the area-equivalent circle diameters of the pores may be 0.7 $\mu$m or more and less than 1.5 $\mu$m. The mean value of the pore perimeters may be 4.0 $\mu$m or more and less than 6 $\mu$m. The complexity of the pores may be more than 15.0 and 19.0 or less. When the first catalyst layer 20 has such a pore structure, delamination between the first catalyst layer 20 and the second catalyst layer 30 can be avoided or reduced. The first catalyst layer 20 having such a pore structure can be formed using a pore-forming material.

The first catalyst layer 20 can be formed as follows, for example.

First, a slurry containing a first catalyst particle precursor and catalytic support powder is prepared. Alternatively, a slurry containing catalytic support powder on which the first catalyst particles are preliminarily loaded may be prepared. The slurry may further contain a pore-forming material, a binder, an additive, or the like. Properties of the slurry, for example, viscosity and a particle diameter of a solid component may be appropriately adjusted. The prepared slurry is applied to the substrate 10 in the first region X. For example, the substrate 10 is dipped in the slurry from the upstream end I side up to a depth corresponding to the first distance La, and after a predetermined time has elapsed, the substrate 10 is drawn from the slurry, thus allowing the substrate 10 in the first region X to be coated with the slurry. Alternatively, the slurry may be poured through the upstream end I of the substrate 10 into the cells 14, and blown with a blower from the upstream end I to be spread toward the downstream end J, thus allowing the substrate 10 to be coated with the slurry. Next, the slurry is heated at a predetermined temperature for a predetermined period, thus vaporizing a solvent in the slurry layer and dissipating the pore-forming material when the slurry layer contains the pore-forming material. When the pore-forming material is dissipated, pores having the shapes corresponding to the shapes of the pore-forming material are formed at portions where the pore-forming material existed. Accordingly, the first catalyst layer 20 is formed on the substrate 10 in the first region X.

As the pore-forming material, a fibrous pore-forming material may be used. Examples of the fibrous pore-forming material include a polyethylene terephthalate (PET) fiber, an acrylic fiber, a nylon fiber, a rayon fiber, and a cellulose fiber. From a perspective of a balance between ease of processing and dissipation temperature, the pore-forming material may be at least one selected from the group consisting of the PET fiber and the nylon fiber.

As the first catalyst particle precursor, an appropriate inorganic acid salt, such as hydrochloride, nitrate, phosphate, sulfate, borate, and hydrofluoride salt, of the metal constituting the first catalyst particles can be used.

(3) Second Catalyst Layer 30

The second catalyst layer 30 lies on the first catalyst layer 20 across the first region X. The second catalyst layer 30 need only extend across at least the first region X and may extend beyond the first position P. Outside the first region X, the second catalyst layer 30 may be formed directly on the substrate 10 or may be formed indirectly on the substrate 10.

The second catalyst layer 30 contains second catalyst particles. The second catalyst particles mainly function as a catalyst for reducing NOx. The second catalyst particles may be, for example, particles of at least one metal selected from the group consisting of rhodium (Rh), platinum (Pt), palladium (Pd), ruthenium (Ru), osmium (Os), iridium (Ir), silver (Ag), and gold (Au), and especially may be Rh particles. The metal constituting the second catalyst particles may be different from the metal constituting the first catalyst particles. The amount of the second catalyst particles contained in the second catalyst layer 30 may be, for example, 0.05 g/L to 5 g/L, 0.1 g/L to 2.5 g/L, 0.2 g/L to 1.2 g/L, or 0.4 g/L to 0.6 g/L based on the substrate capacity in the first region X. This allows the exhaust gas purification device 100 to have a sufficiently high exhaust gas purification performance.

The second catalyst particles may be loaded on catalytic support particles. The second catalyst particles can be loaded by any loading method such as an impregnation loading method, an adsorption loading method, and a water-absorption loading method. The catalytic support particles usable in the second catalyst layer 30 are similar to the catalytic support particles usable in the first catalyst layer 20.

The second catalyst layer 30 may further contain another optional ingredient. Examples of another optional ingredient include, for example, a binder and an additive.

The second catalyst layer 30 is provided with pores 32. This improves the diffusibility of the exhaust gas in the second catalyst layer 30, thus allowing efficient purification of the exhaust gas.

Pore connectivity of the second catalyst layer 30 expressed by formula (1) below may be 5% to 35%,

$$\text{Pore connectivity of second catalyst layer (\%)} = (S2/900) \times 100 \quad (1),$$

wherein S2 represents the mean value of the sum of the areas ($\mu m^2$) of the pores 32 that intersect or are in contact with an outer edge of a 30 $\mu m$ square region and fall within the 30 $\mu m$ square region (hereinafter the sum of the areas of such pores is referred to as a "connected pore area") in a cross-sectional backscattered electron image of the second catalyst layer 30. When the pore connectivity of the second catalyst layer 30 is 5% or more, the diffusibility of the exhaust gas in the second catalyst layer 30 is further improved. This allows reduction in a NOx emission amount and a THC emission amount from the exhaust gas purification device 100. When the pore connectivity of the second catalyst layer 30 is 35% or less, delamination of a part or all of the second catalyst layer 30 can be avoided or reduced, as well as pressure loss by the exhaust gas purification device 100 can be reduced. The connected pore area can be measured using image analysis software, such as ImageJ. The mean value S2 of the connected pore area can be determined by measuring the connected pore areas at 10 or more randomly selected points and calculating the arithmetic mean of the measured connected pore areas.

In addition, the ratio (S2/Sa2) of the mean value S2 of the connected pore area to a mean value Sa2 of the sum of the areas ($\mu m^2$) of all pores 32 included in the above-described 30 $\mu m$ square region (hereinafter, the sum of the areas of all the pores is referred to as a "total pore area") may be 35% to 85%. The total pore area can be measured using image analysis software, such as ImageJ. The mean value Sa2 of the total pore area can be determined by measuring the total pore areas at 10 or more randomly selected points and calculating the arithmetic mean of the measured total pore areas.

In the cross-sectional backscattered electron image of the second catalyst layer 30, the mean value of the areas of the pores 32 may be 0.7 $\mu m^2$ to 9.0 $\mu m^2$. The mean value of the area-equivalent circle diameters of the pores 32 may be 0.7 $\mu m$ to 2 $\mu m$. The mean value of the perimeters of the pores 32 may be 4.0 $\mu m$ to 12 $\mu m$. The complexity of the pores 32 defined by the above formula (4) may be 12.6 to 19.0. The mean value of the areas of the pores 32, the mean value of the area-equivalent circle diameters of the pores 32, and the mean value of the perimeters of the pores 32 can be determined by the method similar to that of the first catalyst layer 20.

In some embodiments, the pore connectivity of the second catalyst layer 30 may be 10% to 35%. This can further reduce the NOx emission amount and the THC emission amount from the exhaust gas purification device 100. The second catalyst layer 30 having such high pore connectivity can be formed by controlling the particle diameter of a solid component in a slurry used for forming the second catalyst layer 30. When the pores 32 are formed using a pore-forming material, use of a large amount of pore-forming material should be avoided, otherwise cracks may be occurred in the substrate 10. Therefore, it is difficult to obtain such high pore connectivity when the pores 32 are formed using the pore-forming material. In addition, in these embodiments, the ratio (S2/Sa2) of the mean value S2 of the connected pore area to the mean value Sa2 of the total pore area may be 50% to 85%. In the cross-sectional backscattered electron image of the second catalyst layer 30, the mean value of the areas of the pores 32 may be 2.0 $\mu m^2$ to 9.0 $\mu m^2$. The mean value of the area-equivalent circle diameters of the pores 32 may be 1.5 $\mu m$ to 2 $\mu m$. The mean value of the perimeters of the pores 32 may be 6 $\mu m$ to 12 $\mu m$. The complexity of the pores 32 defined by the above formula (4) may be 12.6 to 15.0.

The second catalyst layer 30 may have a thickness of 15 $\mu m$ to 65 $\mu m$. In this case, the NOx emission amount and the THC emission amount from the exhaust gas purification device 100 are further reduced. In particular, the second catalyst layer 30 may have a thickness within a range of 35 $\mu m$ to 65 $\mu m$ or 40 $\mu m$ to 65 $\mu m$. In this case, the NOx emission amount and the THC emission amount from the exhaust gas purification device 100 are significantly reduced.

The second catalyst layer 30 can be formed as follows, for example.

First, a slurry containing a second catalyst particle precursor and catalytic support powder is prepared. Alternatively, a slurry containing catalytic support powder on which the second catalyst particles are preliminarily loaded may be prepared. The slurry may further contain a pore-forming material, a binder, an additive, or the like. Properties of the slurry, for example, viscosity and a particle diameter of a solid component may be appropriately adjusted. For example, the particle diameter of the solid component can be adjusted by pulverization conditions (for example, pulverization period) of the solid component using a stirrer, a pulverizer, a bead mill, a ball mill, or the like. The prepared slurry is applied to the substrate 10, on which the first catalyst layer 20 has been preliminarily formed, in the first region X. For example, the substrate 10 is dipped in the slurry from the upstream end I side up to a depth corresponding to the first distance La, and after a predetermined time has elapsed, the substrate 10 is drawn from the slurry, thus allowing the slurry to be applied on the first catalyst layer 20. Alternatively, the slurry may be poured through the upstream end I of the substrate 10 into the cells 14, and blown with a blower from the upstream end I to be spread toward the downstream end J, thus allowing the slurry to be applied on the first catalyst layer 20. Next, the slurry is heated at a predetermined temperature for a predetermined period, thus vaporizing a solvent in the slurry layer and dissipating the pore-forming material when the slurry layer contains the pore-forming material. When the pore-forming material is dissipated, the pores 32 having the shapes corresponding to the shapes of the pore-forming material are formed at portions where the pore-forming material existed. Accordingly, the second catalyst layer 30 is formed on the first catalyst layer 20 in the first region X.

(3) Third Catalyst Layer 40

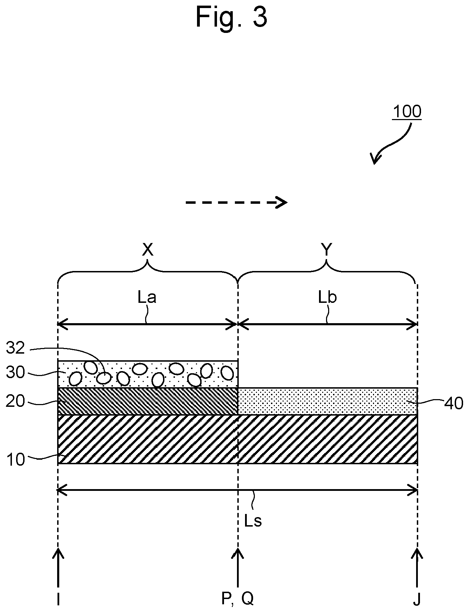

The third catalyst layer 40 lies on the substrate 10 across the second region Y extending between the downstream end J and a second position Q, which is at a second distance Lb from the downstream end J toward the upstream end I (that is, in a direction opposite to the flow direction of the exhaust gas). While the second position Q is positioned downstream with respect to the first position P in FIG 1, the relative relationship between the first position P and the second position Q illustrated in FIG 1 is merely an example. For example, as illustrated in FIG 3, the first position P and the second position Q may be at the same position.

The third catalyst layer 40 contains third catalyst particles. The third catalyst particles mainly function as a catalyst for reducing NOx. The third catalyst particles may be, for example, particles of at least one metal selected from the group consisting of rhodium (Rh), platinum (Pt), palladium (Pd), ruthenium (Ru), osmium (Os), iridium (Ir), silver (Ag), and gold (Au), and especially may be Rh particles. The metal constituting the third catalyst particles may be different from the metal constituting the first catalyst particles, and may be the same as the metal constituting the second catalyst particles. The amount of the third catalyst particles contained in the third catalyst layer 40 may be, for example, 0.05 g/L to 5 g/L, 0.1 g/L to 2.5 g/L, 0.2 g/L to 1.2 g/L, or 0.4 g/L to 0.6 g/L based on the substrate capacity in the second region Y. This allows the exhaust gas purification device 100 to have a sufficiently high exhaust gas purification performance.

The third catalyst particles may be loaded on catalytic support particles. The third catalyst particles can be loaded by any loading method such as an impregnation loading method, an adsorption loading method, and a water-absorption loading method. The catalytic support particles usable in the third catalyst layer 40 are similar to the catalytic support particles usable in the first catalyst layer 20.

The third catalyst layer 40 may further contain another optional ingredient. Examples of another optional ingredient include, for example, a binder and an additive.

The third catalyst layer 40 may be provided with pores (not illustrated). This improves the diffusibility of the exhaust gas in the third catalyst layer 40, thus allowing the efficient purification of the exhaust gas.

Pore connectivity of the third catalyst layer 40 expressed by formula (3) below may be 5% to 35%,

$$\text{Pore connectivity of third catalyst layer (\%)} = (S3/900) \times 100 \quad (3),$$

wherein S3 represents the mean value of the sum of the areas ($\mu m^2$) of the pores that intersect or are in contact with an outer edge of a 30 $\mu m$ square region and fall within the 30 $\mu m$ square region (hereinafter, the sum of the areas of such pores is referred to as a "connected pore area") in a cross-sectional backscattered electron image of the third catalyst layer 40. This can reduce the NOx emission amount from the exhaust gas purification device 100. The connected pore area can be measured using image analysis software, such as ImageJ. The mean value S3 of the connected pore area can be determined by measuring the connected pore areas at 10 or more randomly selected points and calculating the arithmetic mean of the measured connected pore areas.

In addition, the ratio (S3/Sa3) of the mean value S3 of the connected pore area to a mean value Sa3 of the sum of the areas ($\mu$m$^2$) of all pores included in the above-described 30 $\mu$m square region (hereinafter, the sum of the areas of all the pores is referred to as a "total pore area") may be 35% to 85%. The total pore area can be measured using image analysis software, such as ImageJ. The mean value Sa3 of the total pore area can be determined by measuring the total pore areas at 10 or more randomly selected points and calculating the arithmetic mean of the measured total pore areas.

In the cross-sectional backscattered electron image of the third catalyst layer 40, the mean value of pore areas may be 0.7 $\mu$m$^2$ to 9.0 $\mu$m$^2$. The mean value of area-equivalent circle diameters of the pores may be 0.7 $\mu$m to 2 $\mu$m. The mean value of pore perimeters may be 4.0 $\mu$m to 12 $\mu$m. The complexity of the pores defined by the above formula (4) may be 12.6 to 19.0. The mean value of the pore areas, the mean value of the area-equivalent circle diameters of the pores, and the mean value of the pore perimeters can be determined by the method similar to that of the first catalyst layer 20.

In some embodiments, the pore connectivity of the third catalyst layer 40 may be 10% to 35%. This can further reduce the NOx emission amount and the THC emission amount from the exhaust gas purification device 100. The third catalyst layer 40 having such high pore connectivity can be formed by controlling the particle diameter of a solid component in a slurry used for forming the third catalyst layer 40. When the pores are formed using a pore-forming material, use of a large amount of pore-forming material should be avoided, otherwise cracks may be generated in the substrate 10. Therefore, it is difficult to obtain such high pore connectivity when the pores are formed using the pore-forming material. In addition, in these embodiments, the ratio (S3/Sa3) of the mean value S3 of the connected pore area to the mean value Sa3 of the total pore area may be 50% to 85%. In the cross-sectional backscattered electron image of the third catalyst layer 40, the mean value of the pore areas may be 2.0 $\mu$m$^2$ to 9.0 $\mu$m$^2$. The mean value of the area-equivalent circle diameters of the pores may be 1.5 $\mu$m to 2 $\mu$m. The mean value of the pore perimeters may be 6 $\mu$m to 12 $\mu$m. The complexity of the pores defined by the above formula (4) may be 12.6 to 15.0.

The third catalyst layer 40 can be formed as follows, for example.

First, a slurry containing a third catalyst particle precursor and catalytic support powder is prepared. Alternatively, a slurry containing catalytic support powder on which the third catalyst particles are preliminarily loaded may be prepared. The slurry may further contain a pore-forming material, a binder, an additive, or the like. Properties of the slurry, for example, viscosity and a particle diameter of a solid component may be appropriately adjusted. The prepared slurry is applied to the substrate 10 in the second region Y. For example, the substrate 10 is dipped in the slurry from the downstream end J side up to a depth corresponding to the second distance Lb, and after a predetermined time has elapsed, the substrate 10 is drawn from the slurry, thus allowing the substrate 10 in the second region Y to be coated with the slurry. Alternatively, the slurry may be poured through the downstream end J of the substrate 10 into the cells 14, and blown with a blower from the downstream end J to be spread toward the upstream end I, thus allowing the substrate 10 to be coated with the slurry. Next, the slurry is heated at a predetermined temperature for a predetermined period, thus vaporizing a solvent in the slurry layer and dissipating the pore-forming material when the slurry layer contains the pore-forming material. When the pore-forming material is dissipated, pores having the shapes corresponding to the shapes of the pore-forming material are formed at portions where the pore-forming material existed. Accordingly, the third catalyst layer 40 is formed on the substrate 10 in the second region Y. Note that the third catalyst layer 40 may be formed before forming the first catalyst layer 20, may be formed after forming the first catalyst layer 20 and before forming the second catalyst layer 30, or may be formed after forming the second catalyst layer 30.

The pore-forming material usable for forming the third catalyst layer 40 is similar to the pore-forming material usable in the formation of the first catalyst layer 20.

As the third catalyst particle precursor, an appropriate inorganic acid salt, such as hydrochloride, nitrate, phosphate, sulfate, borate, and hydrofluoride salt, of the metal constituting the third catalyst particles can be used.

The exhaust gas purification device 100 according to the embodiment is applicable to various vehicles that include internal combustion engines.

The present disclosure is not limited to the above-described embodiments. The present disclosure can be subjected to various kinds of changes, additions, and deletions without departing from the technical idea or the technical scope of the present disclosure described in the claims.

EXAMPLES

The following will specifically describe the present disclosure with the examples, but the present disclosure is not limited to these examples.

(1) Materials Used in Examples and Comparative Examples

a) Substrate (honeycomb substrate)

Material: Cordierite
Capacity: 875 cc
Thickness of Partition Wall: 2 mil (50.8 $\mu$m)
Cell Density: 600 pieces per square inch
Cross-Sectional Shape of Cell: Hexagon

b) Material 1

$Al_2O_3$ to which $La_2O_3$ was added ($La_2O_3$: 1 wt% to 10 wt%)

c) Material 2

$Al_2O_3$-$CeO_2$-$ZrO_2$ (ACZ) composite oxide to which trace amounts of $Nd_2O_3$, $La_2O_3$, and $Y_2O_3$ were added ($CeO_2$: 15 wt% to 30 wt%)

d) Material 3

$CeO_2$-$ZrO_2$ (CZ) composite oxide to which $La_2O_3$ and $Y_2O_3$ were added ($CeO_2$: 40 wt%, $ZrO_2$: 50 wt%, $La_2O_3$: 5 wt%, $Y_2O_3$: 5 wt%)

e) Material 4

$CeO_2$-$ZrO_2$ (CZ) composite oxide to which $La_2O_3$ and $Y_2O_3$ were added ($CeO_2$: 20 wt%, $ZrO_2$: 70 wt%, $La_2O_3$: 5 wt%, $Y_2O_3$: 5 wt%)

f) Material 5

Palladium nitrate

g) Material 6

Rhodium nitrate

h) Material 7

Barium sulfate

(2) Manufacturing Exhaust Gas Purification Device

Comparative Examples 1 and 2

The material 1, the material 3, the material 5, the material 7, and an $Al_2O_3$-based binder were added to distilled water being stirred in an attritor to pulverize each material, and a polyethylene terephthalate fiber as a fibrous pore-forming material was further added and mixed to prepare a suspended slurry 1. Next, the prepared slurry 1 was poured through one end (upstream end) of the substrate into the cells, and excess slurry was blown off with a blower. Consequently, the partition wall of the substrate was coated with the slurry 1 in the first region between the one end of the substrate and the first position, which was at a distance of 50% of the substrate total length from the one end of the substrate toward the other end (downstream end) of the substrate. The substrate was placed in a drying machine whose inside was held at 120°C for two hours to vaporize water contained in the slurry 1. Next, the substrate was baked in an electric furnace at 500°C for two hours. Thus, a first catalyst layer was formed.

At this time, the amount of the material 1 contained in the first catalyst layer was 50 g/L based on a substrate capacity in the first region, the amount of the material 3 contained in the first catalyst layer was 50 g/L based on the substrate capacity in the first region, the amount of Pd particles contained in the first catalyst layer as the first catalyst particles derived from the material 5 was 5 g/L based on the substrate capacity in the first region, and the amount of the material 7 contained in the first catalyst layer was 5 g/L based on the substrate capacity in the first region.

Next, the material 1, the material 2, the material 4, the material 6, and the $Al_2O_3$-based binder were added to distilled water being stirred in an attritor to pulverize each material, and a suspended slurry 2 was prepared. Next, the prepared slurry 2 was poured through the other end (downstream end) of the substrate into the cells, and excess slurry was blown off with a blower. Consequently, the partition wall of the substrate was coated with the slurry 2 in the second region between the other end of the substrate and the second position, which was at a distance of 50% of the substrate total length from the other end of the substrate toward the one end (upstream end) of the substrate. The substrate was placed in a drying machine whose inside was held at 120°C for two hours to vaporize water contained in the slurry 2. Next, the substrate was baked in an electric furnace at 500°C for two hours. Thus, a third catalyst layer was formed.

At this time, the amount of the material 1 contained in the third catalyst layer was 50 g/L based on the substrate capacity in the second region, the amount of the material 2 contained in the third catalyst layer was 50 g/L based on the substrate capacity in the second region, the amount of the material 4 contained in the third catalyst layer was 50 g/L based on the substrate capacity in the second region, and the amount of Rh particles contained in the third catalyst layer as the third catalyst particles derived from the material 6 was 0.5 g/L based on the substrate capacity in the second region.

Next, the material 1, the material 2, the material 4, the material 6, and the $Al_2O_3$-based binder were added to distilled water being stirred in an attritor to pulverize each material, and a suspended slurry 3 was prepared. Next, the prepared slurry 3 was poured through one end (upstream end) of the substrate into the cells, and excess slurry was blown off with a blower. Consequently, a layer of the slurry 3 was formed in the first region between the one end of the substrate and the first position, which was at a distance of 50% of the substrate total length from the one end of the substrate toward the other end (downstream end) of the substrate. The substrate was placed in a drying machine whose inside was held at 120°C for two hours to vaporize water contained in the slurry 3. Next, the substrate was baked in an electric furnace at 500°C for two hours. Thus, a second catalyst layer was formed.

At this time, the thickness of the second catalyst layer, the total mass (total application amount) of the second catalyst layer based on the substrate capacity in the first region, and the amounts of the material 1, the material 2, the material 4, and Rh particles as the second catalyst particles derived from the material 6 contained in the second catalyst layer based on the substrate capacity in the first region, were as described in Table 1.

Thus, exhaust gas purification devices of Comparative Examples 1 and 2 were manufactured.

Comparative Example 3

An exhaust gas purification device was manufactured similarly to Comparative Example 1 except that the amount of Rh derived from the material 6 and contained in the third catalyst layer was 1.0 g/L based on the substrate capacity in the second region, and that the second catalyst layer was not formed.

Example 1

An exhaust gas purification device was manufactured similarly to Comparative Example 1 except that the period to pulverize the slurry 3 for forming the second catalyst layer was shorter than that of Comparative Example 1, and that the particle size of the materials contained in the slurry 3 was larger than that of Comparative Example 1.

Examples 2 to 4

Exhaust gas purification devices were manufactured similarly to Example 1 except that the thickness of the second catalyst layer, the total mass (total application amount) of the second catalyst layer based on the substrate capacity in the first region, and the amounts of the material 1, the material 2, the material 4, and Rh particles as the second catalyst particles derived from the material 6 contained in the second catalyst layer based on the substrate capacity in the first region, were as described in Table 1.

Example 5

An exhaust gas purification device was manufactured similarly to Comparative Example 1 except that a polyethylene terephthalate fiber as a fibrous pore-forming material was added to the slurry 3.

Example 6

An exhaust gas purification device was manufactured similarly to Example 1 except that the period to pulverize the slurry 2 for forming the third catalyst layer was shorter than that of Example 1, and that the particle size of the materials contained in the slurry 2 was larger than that of Example 1.

Examples 7 to 9

Exhaust gas purification devices were manufactured similarly to Example 6 except that the thickness of the second catalyst layer, the total mass (total application amount) of the second catalyst layer based on the substrate capacity in the first region, and the amounts of the material 1, the material 2, the material 4, and Rh particles as the second catalyst particles derived from the material 6 contained in the second catalyst layer based on the substrate capacity in the first region, were as described in Table 1.

[Table 1]

| | Third Catalyst Layer | Second Catalyst Layer | | | | | | Remarks |
|---|---|---|---|---|---|---|---|---|
| | Rh Particle Content [g/L] | Thickness [μm] | Total Mass [g/L] | Material 1 Content [g/L] | Material 2 Content [g/L] | Material 4 Content [g/L] | Rh Particle Content [g/L] | |
| Comparative Example 1 | 0.5 | 36 | 100 | 33 | 33 | 33 | 0.5 | |
| Comparative Example 2 | 0.5 | 13 | 40 | 13 | 13 | 13 | 0.5 | |
| Comparative Example 3 | 1.0 | 0 | 0 | 0 | 0 | 0 | 0 | |
| Example 1 | 0.5 | 42 | 100 | 33 | 33 | 33 | 0.5 | Pulverization period of slurry 3 was shortened |
| Example 2 | 0.5 | 15 | 40 | 13 | 13 | 13 | 0.5 | |
| Example 3 | 0.5 | 65 | 150 | 50 | 50 | 50 | 0.5 | |
| Example 4 | 0.5 | 78 | 200 | 66 | 66 | 66 | 0.5 | |
| Example 5 | 0.5 | 38 | 100 | 33 | 33 | 33 | 0.5 | Pore-forming material was added to slurry 3 |
| Example 6 | 0.5 | 42 | 100 | 33 | 33 | 33 | 0.5 | Pulverization periods of slurry 2 and slurry 3 were shortened |
| Example 7 | 0.5 | 15 | 40 | 13 | 13 | 13 | 0.5 | |
| Example 8 | 0.5 | 65 | 150 | 50 | 50 | 50 | 0.5 | |
| Example 9 | 0.5 | 78 | 200 | 66 | 66 | 66 | 0.5 | |

(3) Structure Evaluation

In each of the exhaust gas purification devices of Comparative Example 1 and Examples 1 and 5, an approximately 1 cm cube of sample was extracted from a portion including the second catalyst layer and buried in a room temperature-curable epoxy resin. Wet sanding was used to prepare a cross-section, which was perpendicular or parallel to the flow direction of an exhaust gas, of the second catalyst layer. The sanded surface was subjected to conductive treatment with carbon.
The cross-section of the second catalyst layer was observed under the following conditions using a scanning electron microscope (SEM, "SU7000" manufactured by Hitachi High-Tech Corporation).

Accelerating Voltage: 5 kV
Observation Magnification: 1000 folds
Image Capture Speed: 128 seconds
Image File Format: TIFF
Data Size: 2560 × 1920 pixels
Detector: Semiconductor-type backscattered-electron detector (Photo Diode BSE Detector)

At least 10 backscattered electron images of the cross-section, which was perpendicular or parallel to the flow direction of an exhaust gas, of the second catalyst layer were obtained. The resolution of a backscattered electron image under the above-described conditions was 0.05 $\mu$m/pixel.

Image analysis software (ImageJ) was used to binarize each backscattered electron image and discriminate pores from others (such as a catalyst and a binder). In the binarized image of each backscattered electron image (hereinafter referred to as a "binarized image"), pores having an area of at least 0.02 $\mu$m$^2$, which was the resolution of the backscattered electron image, and not in contact with the outer edge of the image were extracted. The area and perimeter of each pore were determined, and the complexity of each pore was calculated by dividing the square of the perimeter by the area. When the cross-section of a pore is a perfect circle, the pore should have a minimum complexity of $4\pi$. However, as a result of the calculation, among the pores having an area less than 0.05 $\mu$m$^2$ (equivalent to a circular equivalent diameter of approximately 0.25 $\mu$m), some pores had a complexity value of less than $4\pi$. Therefore, the resolution by the analysis method in the example was determined as an area of 0.05 $\mu$m$^2$ (circular equivalent diameter of approximately 0.25 $\mu$m).

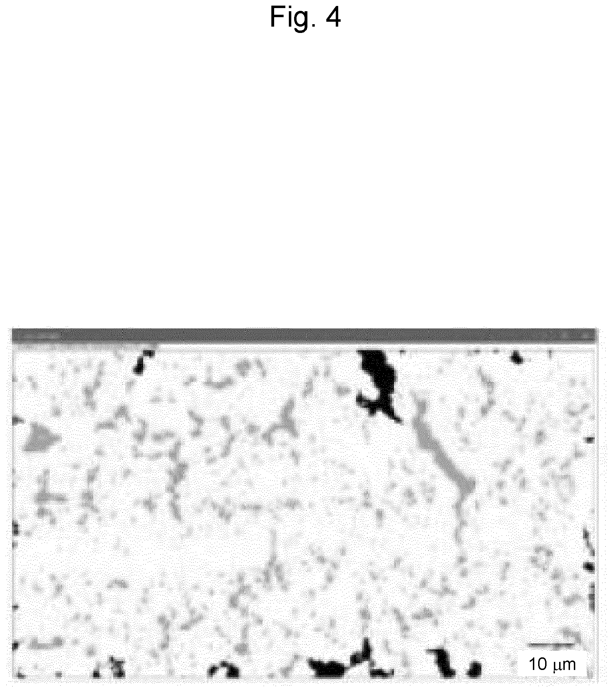

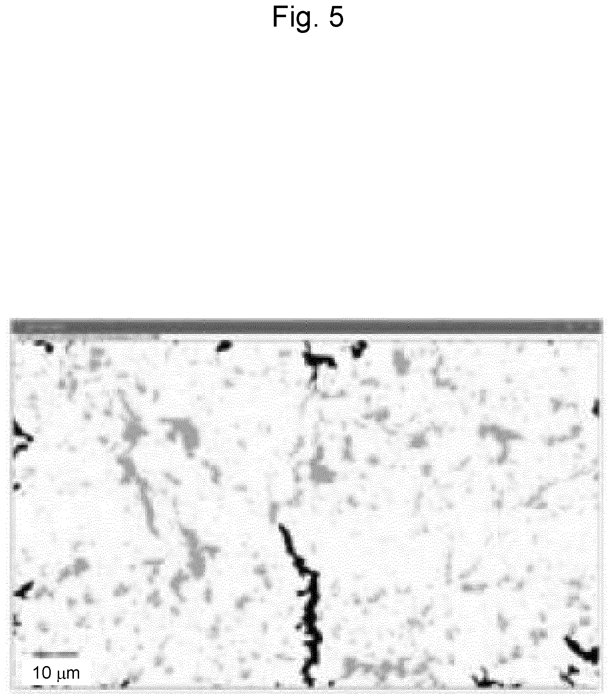

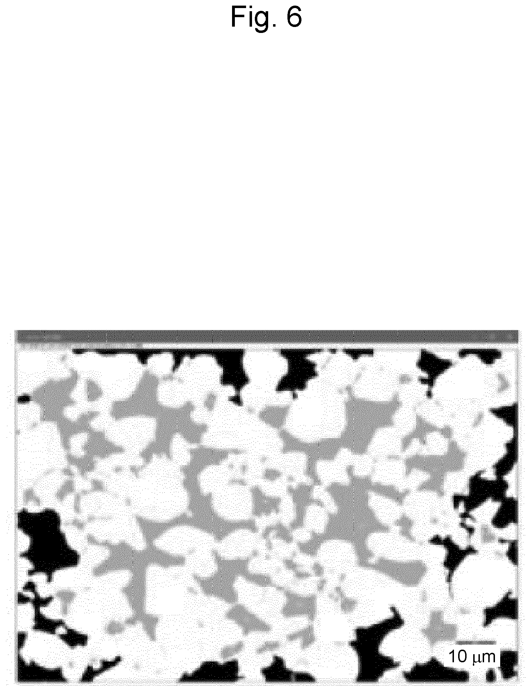

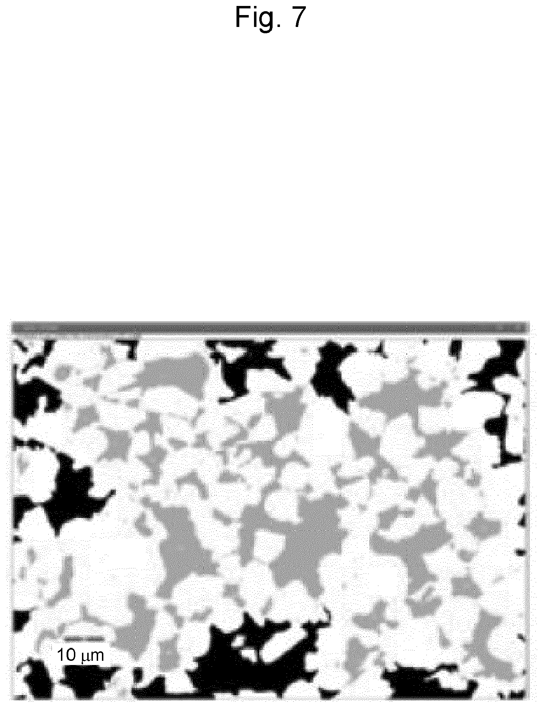

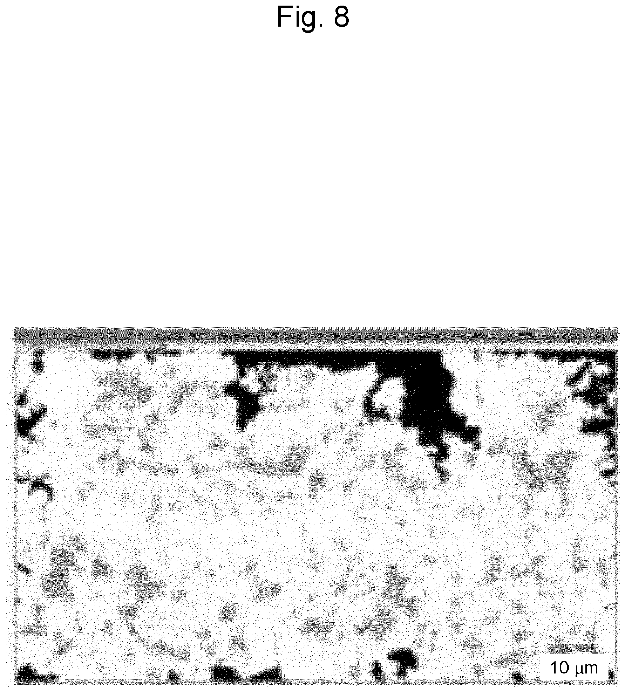

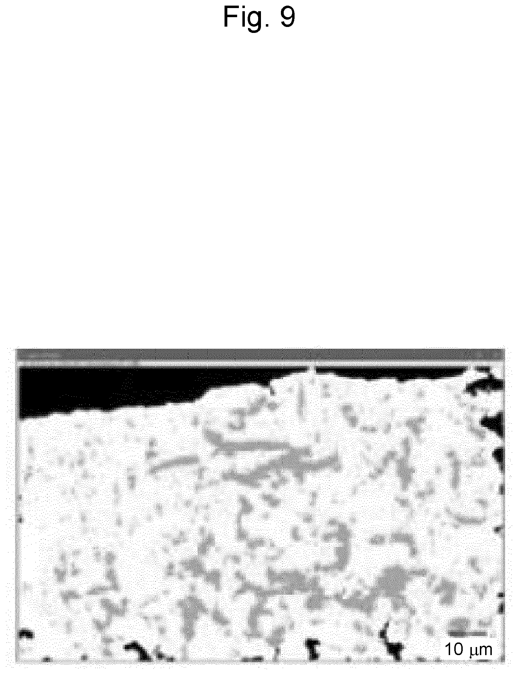

In each binarized image, pores having the area of at least 0.05 $\mu$m$^2$, which was the analysis resolution, and not in contact with the outer edge of the image were extracted. FIGS. 4 to 9 illustrate examples of the obtained images. The area, the area-equivalent circle diameter, and the perimeter of each pore were determined, and the arithmetic means of these values were calculated. Further, the mean values of the areas and the perimeters of the pores were used to calculate the complexity of the pores expressed by following formula:

$$\text{Complexity of pores} = L^2/S,$$

wherein S represents the mean value of the areas of the pores, and L represents the mean value of the perimeters of the pores. Table 2 shows the results.

[Table 2]

| | Area [μm²] | | Area-Equivalent Circle Diameter [μm] | | Perimeter [μm] | | Complexity [-] | |
|---|---|---|---|---|---|---|---|---|
| | Perpendicular | Parallel | Perpendicular | Parallel | Perpendicular | Parallel | Perpendicular | Parallel |
| Comparative Example 1 | 0.67 | 0.69 | 0.67 | 0.66 | 3.65 | 3.80 | 19.74 | 20.99 |
| Example 1 | 8.31 | 8.95 | 1.72 | 1.81 | 10.27 | 11.04 | 12.68 | 13.60 |
| Example 5 | 1.38 | 1.35 | 0.81 | 0.82 | 4.63 | 5.05 | 15.58 | 16.71 |

In each binarized image, a 30 $\mu$m square region was randomly selected. Furthermore, 30 $\mu$m square regions at positions parallel-shifted in the up, down, left, and right directions by 10 $\mu$m from the first selected region were also selected. The sum of the areas of all pores (i.e., total pore area) included in each of these five regions was measured by the image analysis software (ImageJ). The sum of the areas of pores not in contact with the outer edge of each region was also measured. The sum of the areas of the pores not in contact with the outer edge of each region was subtracted from the total pore area to obtain a value. This value corresponds to the sum of the areas of the pores that intersect or are in contact with the outer edge of each region and fall within the region (i.e., connected pore area). The arithmetic mean of the connected pore areas determined in the respective regions was calculated to obtain the mean value S2 of the connected pore areas. The mean value S2 of the connected pore areas was divided by the area of each region (i.e., 900 $\mu$m$^2$) to obtain a pore connectivity. Table 3 shows the results. The second catalyst layer of Example 5 formed using a pore-forming material had a higher pore connectivity than the second catalyst layer of Comparative Example 1. The second catalyst layer of Example 1 formed by the shortened pulverization period of the slurry had a higher pore connectivity than the second catalyst layers of Comparative Example 1 and Example 5.

Additionally, the arithmetic mean of the total pore areas in the respective regions described above was calculated to obtain the mean value Sa2 of the total pore areas. Table 3 shows the ratio (S2/Sa2) of the mean value S2 of the connected pore areas to the mean value Sa2 of the total pore areas.

[Table 3]

|  | Pore Connectivity [%] | | S2/Sa2 [%] | |
|---|---|---|---|---|
|  | Perpendicular | Parallel | Perpendicular | Parallel |
| Comparative Example 1 | 4.1 | 3.3 | 33.3 | 29.3 |
| Example 1 | 30.1 | 29.4 | 82.5 | 82.0 |
| Example 5 | 8.5 | 9.7 | 47.1 | 48.0 |

(4) Exhaust Gas Purification Performance Evaluation

The exhaust gas purification devices of Examples 1 to 5 and Comparative Examples 1 to 3 were each arranged immediately below an engine. An engine operation condition was set such that the catalyst bed temperature of each of the exhaust gas purification devices was 950°C. Over 50 hours, an air-fuel ratio feedback control and a fuel cut were alternately repeated.

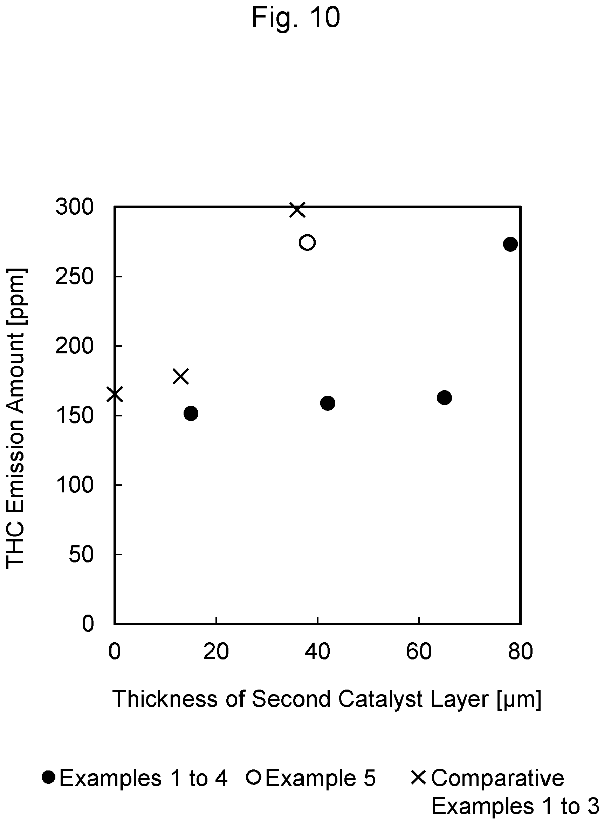

Then, the engine operation condition was set such that the temperature of a gas introduced into each of the exhaust gas purification devices was 550°C. The air-fuel ratio (A/F) of a mixed gas supplied to the engine was set to 14.4, and an exhaust gas from the engine was introduced into each of the exhaust gas purification devices. After the temperature of the gas introduced into each of the exhaust gas purification devices stabilized at 550°C, the air-fuel ratio (A/F) of the mixed gas supplied to the engine was alternately switched between 14.1 (rich (i.e., excess fuel)) and 15.1 (lean (i.e., excess oxygen)) at a cycle time of three minutes. At three minutes after the A/F was switched from 15.1 to 14.1 for the third time, the THC emission amount and the NOx emission amount were measured. FIGS. 10 to 13 show the results.

As understood from FIG 10, when the exhaust gas purification devices of the examples and the comparative examples had the second catalyst layers with similar thicknesses, the exhaust gas purification devices of the examples exhibited lower THC emission amounts than the exhaust gas purification devices of the comparative examples. It is considered that this is because the pore structure, in particular, the high pore connectivity of the second catalyst layer, improved the diffusibility of the exhaust gas in the second catalyst layer, which allowed the exhaust gas to easily pass through the second catalyst layer to reach the first catalyst layer, thereby enhancing the probability of HC in the exhaust gas coming into contact with the Pd particles in the first catalyst layer to be oxidized.

In particular, the exhaust gas purification devices of Examples 1 to 4 in which the pulverization periods of the slurry 3 were shortened exhibited even lower THC emission amounts. It is considered that this is due to the particularly high pore connectivity of the second catalyst layer (see Table 3).

Further, the exhaust gas purification devices of Examples 1 to 3, which had the second catalyst layers having a thickness of 15 $\mu$m to 65 $\mu$m, exhibited particularly low THC emission amounts. This result indicates that when the thickness of the second catalyst layer was 65 $\mu$m or less, it was easy enough for the exhaust gas to pass through the second catalyst layer to reach the first catalyst layer. On the other hand, in Comparative Examples 1 to 3, the greater the thickness of the second catalyst layer, the greater the THC emission amount, and in particular, a significantly high THC emission amount was exhibited when the thickness of the second catalyst layer was 36 $\mu$m or more. This suggests the followings. In Comparative Examples 1 and 2, the diffusibility of the exhaust gas in the second catalyst layer was poor. Therefore, the greater the thickness of the second catalyst layer, the lower the amount of the exhaust gas reaching the first catalyst layer and the lower the probability of HC in the exhaust gas coming into contact with the Pd particles in the first catalyst layer, resulting in an increase in the amount of HC remaining unoxidized. It is considered that, in particular, when the thickness of the second catalyst layer was 36 $\mu$m or more, the exhaust gas reaching the first catalyst layer was significantly reduced. FIG 10 shows that the reduction in the THC emission amount caused by the improved diffusibility of the exhaust gas in the second catalyst layer was particularly significant when the thickness of the second catalyst layer was 36 $\mu$m to 65 $\mu$m, especially within a range of 42 $\mu$m to 65 $\mu$m.

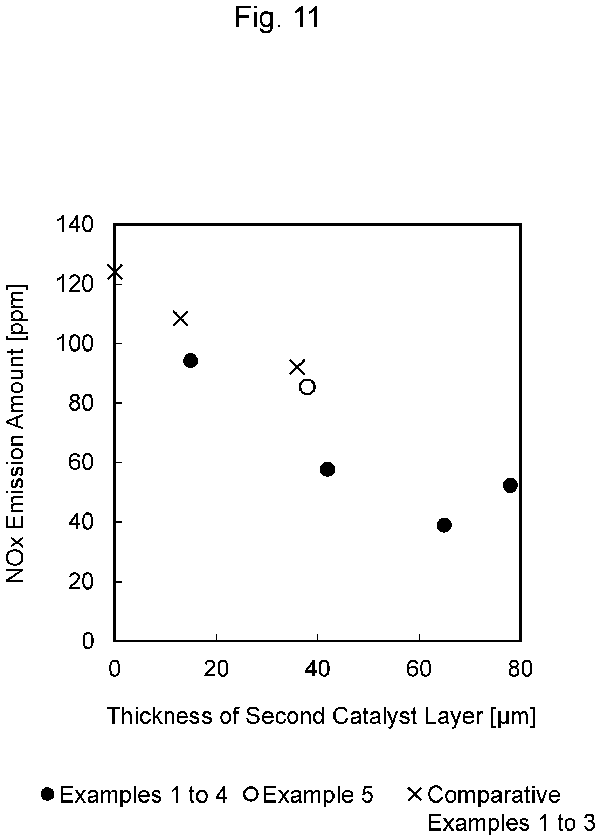

As understood from FIG 11, when the exhaust gas purification devices of the examples and the comparative examples had the second catalyst layers with similar thicknesses, the exhaust gas purification devices of the examples exhibited lower NOx emission amounts than the exhaust gas purification devices of the comparative examples. In particular, the exhaust gas purification devices of Examples 1 to 4 in which the pulverization periods of the slurry 3 were shortened exhibited even lower NOx emission amounts.

The amount in reduction of the NOx emission amount with an increase in the thickness of the second catalyst layer was greater in Examples 1 to 4 than in Comparative Examples 1 to 3. The inventors consider that this result is caused by the following reason.

In the exhaust gas purification devices of the comparative examples and the examples, the greater the thickness of the second catalyst layer was, the lower the concentration of Rh in the second catalyst layer was. The lower the concentration of Rh in the second catalyst layer was, the less the coarsening of the Rh particles in the second catalyst layer by heat occurred, and thus the less the decrease of the catalytic activity of the Rh particles was caused. Therefore, the Rh particles in the second catalyst layer having greater thickness were able to deliver higher NOx conversion performance. However, in Comparative Examples 1 to 3, the greater the thickness of the second catalyst layer was, the more HC remained unoxidized in the first catalyst layer (see FIG 10). The remaining HC may cover the Rh particles in the third catalyst layer to decrease the catalytic activity of the Rh particles in the third catalyst layer. Therefore, in Comparative Examples 1 to 3, the greater the thickness of the second catalyst layer, the lower the NOx conversion performance by the Rh particles in the third catalyst layer. On the other hand, in Examples 1 to 5, when the thickness of the second catalyst layer was 65 $\mu$m or less, the increase in the amount of the remaining HC with an increase in the thickness of the second catalyst layer was slight (see FIG 10), thus the decrease in the catalytic activity of the Rh particles in the third catalyst layer due to the remaining HC was small. Therefore, in Examples 1 to 5, the Rh particles in the third catalyst layer were able to deliver higher NOx conversion performance than those in Comparative Examples 1 to 3. It is considered that these caused the difference in NOx emission amount between the examples and the comparative examples illustrated in FIG 11.

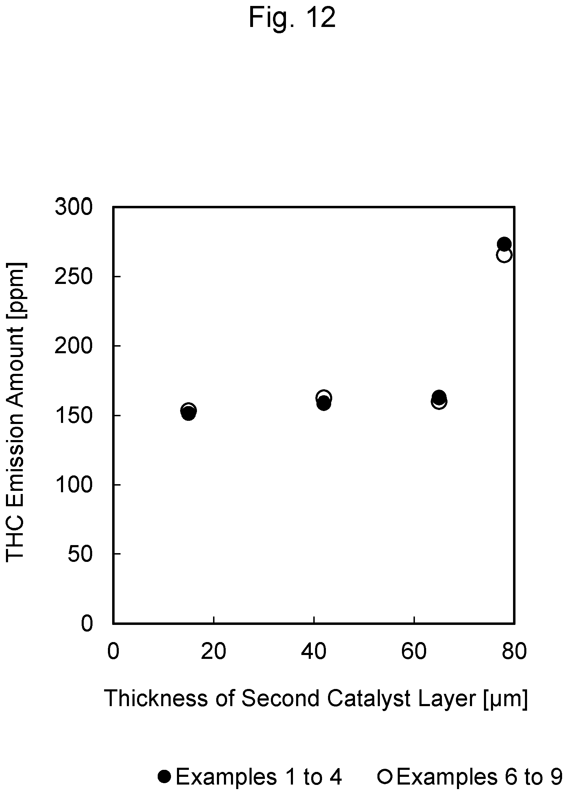

As illustrated in FIG 12, the exhaust gas purification devices of Examples 6 to 9 exhibited THC emission amounts equivalent to those of the exhaust gas purification devices of Examples 1 to 4.

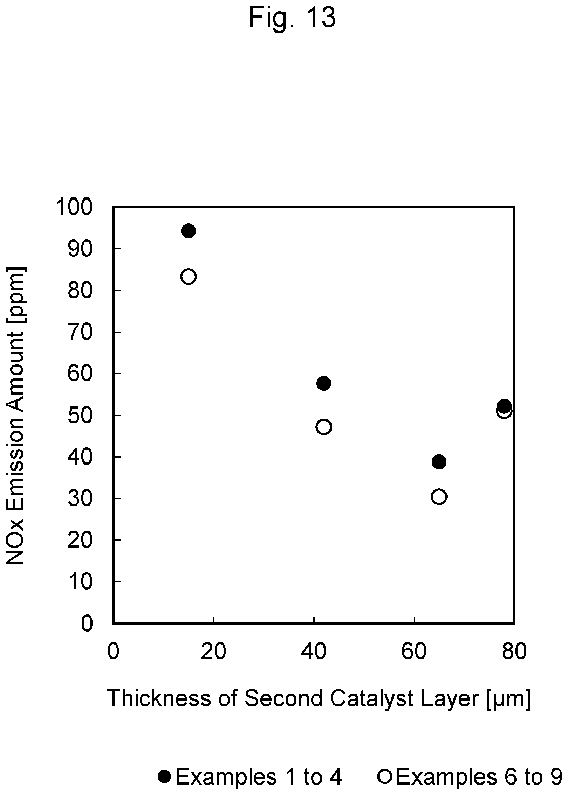

As illustrated in FIG 13, the exhaust gas purification devices of Examples 6 to 9 exhibited lower NOx emission amounts than the exhaust gas purification devices of Examples 1 to 4. In particular, the exhaust gas purification devices of Examples 6 to 8, which had the second catalyst layers having a thickness of 15 $\mu$m to 65 $\mu$m, exhibited clearly lower NOx emission amounts than the exhaust gas purification devices of Examples 1 to 3. In Examples 6 to 9, the pulverization periods of the slurry 2 were shorter than in Examples 1 to 4. It is therefore considered that the third catalyst layers of the exhaust gas purification devices of Examples 6 to 9 had higher pore connectivities than the third catalyst layers of the exhaust gas purification devices of Examples 1 to 4, causing themselves to have higher exhaust gas diffusibility. Therefore, it is considered that NOx in the exhaust gas introduced into the exhaust gas purification devices of Examples 6 to 9 came into contact with the Rh particles with a higher probability in the third catalyst layers to be reduced, resulting in the reduced NOx emission amounts.

DESCRIPTION OF SYMBOLS

| | |
|---|---|
| 10 | Substrate |
| 12 | Frame portion |
| 14 | Cell |
| 16 | Partition wall |
| 20 | First catalyst layer |
| 30 | Second catalyst layer |
| 40 | Third catalyst layer |
| 100 | Exhaust gas purification device |
| I | Upstream end (First end) |
| J | Downstream end (Second end) |

P First position
Q Second position
X First region
Y Second region

## Claims

1. An exhaust gas purification device (100) comprising:

   a substrate (10) including an upstream end (I) through which an exhaust gas is introduced into the device and a downstream end (J) through which the exhaust gas is discharged from the device;
   a first catalyst layer (20) containing first catalyst particles, the first catalyst layer (20) lying on the substrate (10) across a first region (X), the first region (X) extending between the upstream end (I) and a first position (P), the first position (P) being at a first distance from the upstream end (I) toward the downstream end (J); and
   a second catalyst layer (30) containing second catalyst particles, the second catalyst layer (30) lying on the first catalyst layer (20) across the first region (X),
   wherein the second catalyst layer (30) is provided with pores, and
   wherein a pore connectivity of the second catalyst layer (30) expressed by formula (1) below is 5% to 35%,
   the pore connectivity of the second catalyst layer (30) (%) = (S2/900) $\times$ 100 (1),
   wherein S2 represents a mean value of a sum of areas ($\mu$m$^2$) of the pores that intersect or are in contact with an outer edge of a 30 $\mu$m square region and fall within the 30 $\mu$m square region in a cross-sectional backscattered electron image of the second catalyst layer (30).

2. The exhaust gas purification device (100) according to claim 1,
   wherein the pore connectivity of the second catalyst layer (30) is 10% to 35%.

3. The exhaust gas purification device (100) according to claim 1 or 2,
   wherein in the cross-sectional backscattered electron image of the second catalyst layer (30), a mean value of areas of the pores not in contact with an outer edge of the cross-sectional backscattered electron image is 0.7 $\mu$m$^2$ to 9.0 $\mu$m$^2$.

4. The exhaust gas purification device (100) according to any one of claims 1 to 3,
   wherein in the cross-sectional backscattered electron image of the second catalyst layer (30), a mean value of areas of the pores not in contact with an outer edge of the cross-sectional backscattered electron image is 2.0 $\mu$m$^2$ to 9.0 $\mu$m$^2$.

5. The exhaust gas purification device (100) according to any one of claims 1 to 4,
   wherein the second catalyst layer (30) has a thickness within a range of 15 $\mu$m to 65 $\mu$m.

6. The exhaust gas purification device (100) according to any one of claims 1 to 5,
   wherein the second catalyst layer (30) has a thickness within a range of 35 $\mu$m to 65 $\mu$m.

7. The exhaust gas purification device (100) according to any one of claims 1 to 6,

   wherein the first catalyst layer (20) is provided with pores, and
   wherein a pore connectivity of the first catalyst layer (20) expressed by formula (2) below is 5% to 35%,
   the pore connectivity of the first catalyst layer (20) (%) = (S 1/900) $\times$ 100 (2),
   wherein S 1 represents a mean value of a sum of areas ($\mu$m$^2$) of the pores that intersect or are in contact with an outer edge of a 30 $\mu$m square region and fall within the 30 $\mu$m square region in a cross-sectional backscattered electron image of the first catalyst layer (20).

8. The exhaust gas purification device (100) according to claim 7,
   wherein the pore connectivity of the first catalyst layer (20) is 5% or more and less than 10%.

9. The exhaust gas purification device (100) according to any one of claims 1 to 8, further comprising
   a third catalyst layer (40) containing third catalyst particles, the third catalyst layer (40) lying on the substrate (10) across a second region (Y), the second region (Y) extending between the downstream end (J) and a second position (Q), the second position (Q) being at a second distance from the downstream end (J) toward the upstream end (I).

10. The exhaust gas purification device (100) according to claim 9,

wherein the third catalyst layer (40) is provided with pores, and
wherein a pore connectivity of the third catalyst layer (40) expressed by formula (3) below is 5% to 35%,
the pore connectivity of the third catalyst layer (40) (%) = (S3/900) × 100 (3),
wherein S3 represents a mean value of a sum of areas ($\mu m^2$) of the pores that intersect or are in contact with an outer edge of a 30 $\mu$m square region and fall within the 30 $\mu$m square region in a cross-sectional backscattered electron image of the third catalyst layer (40).

11. The exhaust gas purification device (100) according to claim 10,
wherein the pore connectivity of the third catalyst layer (40) is 10% to 35%.

12. The exhaust gas purification device (100) according to any one of claims 1 to 11,

wherein in the cross-sectional backscattered electron image of the second catalyst layer (30), a complexity of the pores expressed by formula (4) below is 12.6 to 19.0,
the complexity of pores = $L^2/S$ (4),
wherein S represents a mean value of areas of the pores not in contact with an outer edge of the cross-sectional backscattered electron image, and L represents a mean value of perimeters of the pores not in contact with the outer edge of the cross-sectional backscattered electron image.

# Fig. 1

100

# Fig. 2

# Fig. 3

100

X          Y

La          Lb

32
30
20
40
10

Ls

I          P, Q          J

# Fig. 4

10 µm

# Fig. 5

10 μm

# Fig. 6

Fig. 7

10 μm

# Fig. 8

# Fig. 9

# Fig. 10

Examples 1 to 4 ● ○ Example 5 × Comparative Examples 1 to 3

# Fig. 11

Examples 1 to 4 ○ Example 5 × Comparative
Examples 1 to 3

# Fig. 12

# Fig. 13

# EUROPEAN SEARCH REPORT

Application Number

EP 23 20 3535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/128558 A1 (NUNAN JOHN G [US] ET AL) 24 May 2012 (2012-05-24)<br>* figure 1e * | 1-12 | INV.<br>B01D53/94<br>B01J23/63<br>B01J35/00 |
| X | US 2020/316579 A1 (TAKESUE YUKI [JP] ET AL) 8 October 2020 (2020-10-08)<br>* figure 2 *<br>* paragraph [0030] * | 1-12 | B01J35/57<br>B01J35/60<br>F01N3/10 |
| X | US 6 087 298 A (SUNG SHIANG [US] ET AL) 11 July 2000 (2000-07-11)<br>* figure 3 *<br>* example 1 * | 1-12 | |
| X | WO 2022/103805 A1 (BASF CORP [US]; WU ZHI YI [CN]) 19 May 2022 (2022-05-19)<br>* the whole document * | 1-12 | |

TECHNICAL FIELDS SEARCHED (IPC)

B01D
F01N
B01J

The present search report has been drawn up for all claims

| Place of search | Date of completion of the search | Examiner |
|---|---|---|
| The Hague | 11 March 2024 | Hackenberg, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**EP 4 364 824 A1**

## ANNEX TO THE EUROPEAN SEARCH REPORT
## ON EUROPEAN PATENT APPLICATION NO.

**EP 23 20 3535**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-03-2024**

| Patent document cited in search report | | | Publication date | Patent family member(s) | | | Publication date |
|---|---|---|---|---|---|---|---|
| US 2012128558 | A1 | | 24-05-2012 | BR | 112013011920 | A2 | 14-11-2017 |
| | | | | CN | 103201018 | A | 10-07-2013 |
| | | | | EP | 2643078 | A1 | 02-10-2013 |
| | | | | JP | 5841161 | B2 | 13-01-2016 |
| | | | | JP | 2014509242 | A | 17-04-2014 |
| | | | | KR | 20130141540 | A | 26-12-2013 |
| | | | | RU | 2013128390 | A | 27-12-2014 |
| | | | | US | 2012128558 | A1 | 24-05-2012 |
| | | | | US | 2013058848 | A1 | 07-03-2013 |
| | | | | WO | 2012069405 | A1 | 31-05-2012 |
| US 2020316579 | A1 | | 08-10-2020 | CN | 109153014 | A | 04-01-2019 |
| | | | | EP | 3466541 | A1 | 10-04-2019 |
| | | | | JP | 6864677 | B2 | 28-04-2021 |
| | | | | JP | WO2017204008 | A1 | 22-03-2019 |
| | | | | US | 2020316579 | A1 | 08-10-2020 |
| | | | | WO | 2017204008 | A1 | 30-11-2017 |
| US 6087298 | A | | 11-07-2000 | AU | 2211497 | A | 05-12-1997 |
| | | | | BR | 9708994 | A | 03-08-1999 |
| | | | | CN | 1218423 | A | 02-06-1999 |
| | | | | DE | 19781768 | T1 | 08-04-1999 |
| | | | | JP | 2000510761 | A | 22-08-2000 |
| | | | | JP | 2008114227 | A | 22-05-2008 |
| | | | | US | 6087298 | A | 11-07-2000 |
| | | | | WO | 9743035 | A1 | 20-11-1997 |
| | | | | ZA | 973155 | B | 20-11-1997 |
| WO 2022103805 | A1 | | 19-05-2022 | BR | 112023009042 | A2 | 06-02-2024 |
| | | | | CN | 116490272 | A | 25-07-2023 |
| | | | | EP | 4243965 | A1 | 20-09-2023 |
| | | | | JP | 2023550728 | A | 05-12-2023 |
| | | | | KR | 20230107834 | A | 18-07-2023 |
| | | | | US | 2023405568 | A1 | 21-12-2023 |
| | | | | WO | 2022103805 | A1 | 19-05-2022 |

EPO FORM P0459

For more details about this annex : see Official Journal of the European Patent Office, No. 12/82

34

**EP 4 364 824 A1**

**REFERENCES CITED IN THE DESCRIPTION**

**Patent documents cited in the description**

- JP 2008279428 A

- JP 2022061298 A